# EUROPÄISCHE PATENTSCHRIFT

(11) **EP 2 565 035 B1**
(45) Veröffentlichungstag und Bekanntmachung des Hinweises auf die Patenterteilung: **08.07.2026**
(21) Anmeldenummer: 12194807.9
(22) Anmeldetag: 24.01.2008
(51) Int. Cl.: B32B 29/06, D21H 27/18

(54) **Verfahren zum Herstellen eines flächigen bedruckbaren Halbzeugs für ein flächiges Bauteil, insbesondere für Boden-, Wand-, Decken- und/oder Möbelanwendungen.**
Method for the production of a planar, printable semifinished product for a planar building component, particularly for floor, wall, ceiling, and/or furniture uses.
Procédé de production d'un semi-produit plan, imprimable, pour un composant plant, notamment pour utilisation sur les sols, les murs, les plafonds et/ou les meubles.

(30) Priorität: 25.04.2007 DE 102007019851
(43) Veröffentlichungstag der Anmeldung: 06.03.2013
(62) Teilanmeldung aus: 08707235.1
(73) Patentinhaber: Unilin, BV, 8710 Wielsbeke (BE)
(72) Erfinder: Tünte, Udo, 46348 Raesfeld (DE); Schwitte, Richard, 48712 Gescher (DE); Petersen, Frank, 48653 Coesfeld (DE)
(74) Vertreter: Unilin Technologies

(56) Entgegenhaltungen:
- EP-A1- 1 072 398
- EP-A1- 1 749 676
- EP-A2- 0 046 460
- DE-A1- 10 220 501
- US-A1- 2002 025 426

## Beschreibung

Die Erfindung betrifft ein Verfahren zum Herstellen eines flächigen, bedruckbaren Halbzeugs für ein flächiges Bauteil, insbesondere für Boden-, Wand-, Decken- und/oder Möbelanwendungen, wobei eine bedruckbare, unbedruckte Druckpapierschicht mit einem flächigen Grundkörper unter Druck und Hitzeeinfluss verpresst wird.

Ein Verfahren zum Herstellen eines bedruckbaren Halbzeugs für ein flächiges Bauteil der eingangs genannten Art ist bereits aus der EP 1 749 676 A1 bekannt. Diese Druckschrift betrifft konkret ein Verfahren und eine Vorrichtung zum Herstellen einer mittels eines Tintenstrahldruckverfahrens bedruckbaren Papierbahn sowie einen mittels dieses Verfahrens bedruckbaren Gegenstand. Bei dem Gegenstand kann es sich um Tafeln oder Platten handeln. Bei der EP 1749 676 A1 geht es darum, ein Tintenstrahldruckverfahren zur Verfügung zu stellen, wobei das Druckergebnis auf der Oberfläche der zu bedruckenden Gegenstände hinsichtlich des Aussehens höchsten Qualitätsanforderungen entspricht. Hierzu ist im Stand der Technik vorgesehen, dass eine längs ihrer gesamten Dicke für flüssiges Kunstharz saugfähige Papierbahn von einer Seite her derart mit flüssigem Kunstharz getränkt wird, dass das Kunstharz die Papierbahn nicht vollständig durchdringt, so dass die andere Seite der Papierbahn zumindest weitgehend frei von Kunstharz ist. Dabei weist die bekannte Papierbahn einen oberseitigen, im wesentlichen harzfreien Bereich auf, der etwa 50 % der Dicke der Papierbahn ausmacht. Durch das bekannte Verfahren sollen Oberflächen geschaffen werden, die hinsichtlich ihrer für das Bedrucken erforderlichen Eigenschaften konventionellen Papieroberflächen entsprechen, die durch die Auswahl des Papiers und der Färbeflüssigkeit optimal an das angestrebte Druckergebnis angepasst sein sollen.

Aus der EP - A - 0 046 460 ist bereits ein Formteil und ein Verfahren zur Herstellung eines Formteils bekannt. Das Formteil weist einen Grundkörper auf, auf dessen Außenseiten beidseitig jeweils eine haftvermittelnde Glasfaserschicht und eine äußere dekorative Papierschicht vorgesehen ist, wobei die dekorative Papierschicht mit einem Harz durch imprägniert ist.

Aus der US 2002/025426 A1 ist bereits ein Verfahren zur Herstellung eines mit einem Dekor versehen Paneels bekannt, bei dem auf einen Grundkörper ein Dekorpapier aufgebracht wird, das unter-und oberseitig beharzt ist.

Die Herstellung des bekannten, teilbeharzten Druckpapiers setzt jedoch einigen apparativen Aufwand beim Druckpapierhersteller voraus, was mit entsprechenden apparativen Kosten verbunden ist. Dementsprechend ist eine kostengünstige Fertigung nur realisierbar, wenn entsprechend grosse Mengen des Druckpapiers hergestellt werden. Problematisch ist im übrigen, dass es nicht immer einfach ist, zu einer genau vorbestimmten Teilbeharzung des Druckpapiers zu kommen. Unterschiedlich dicke Druckpapiere erfordern zur Erzielung einer bestimmten Teilbeharzung die Einstellung verschiedener Prozessparameter, was, insbesondere dann, wenn nur geringe Mengen an Druckpapier benötigt werden, schwierig bzw. teuer ist. Problematisch ist in diesem Zusammenhang auch, dass bei einer zu geringen Beharzung des Druckpapiers nicht gewährleistet werden kann, dass bei der anschliessenden Verpressung des auf Bögen geschnittenen Druckpapiers mit einem Grundkörper eine vollflächige und dauerhafte Verbindung gegeben ist.

Aufgabe der vorliegenden Erfindung ist es, hier Abhilfe zu schaffen.

Zur Lösung der vorgenannten Aufgabe ist bei einem Verfahren gemäß Anspruch 1 vorgesehen, dass vor dem Aufpressen eine beharzte Unterschicht als sogenanntes Underlay auf dem Grundkörper angeordnet wird, die sich zwischen dem Grundkörper und der Druckpapierschicht befindet, und dass die Unterschicht zusammen mit der Druckpapierschicht mit dem Grundkörper verpresst bzw. auf diesen aufgepresst wird. Die Verwendung einer beharzten Unterschicht als Underlay hat den Vorteil, dass unabhängig von der Art und Dicke des Druckpapiers in jedem Falle eine sichere Verbindung des Druckpapiers mit dem Grundkörper nach dem Verpressen sichergestellt werden kann. Darüber hinaus bietet die Erfindung den wesentlichen Vorteil, dass zur Herstellung des unbedruckten Halbzeugs ohne weiteres ein unbeharztes Druckpapier verwendet werden kann. Somit kann der apparative Aufwand zur Herstellung eines teilbeharzten Druckpapier grundsätzlich eingespart werden.

In Abhängigkeit des Harzanteils der Unterschicht kann sich nach dem Verpressen der beiden Schichten mit dem Grundkörper eine Durchbeharzung oder auch eine definierte Teilbeharzung der Druckpapierschicht ergeben, wobei der obere Bereich und insbesondere die Oberseite der Druckpapierschicht dann zumindest im wesentlichen harzfrei bleibt. Es versteht sich in diesem Zusammenhang, dass hierfür nicht nur Druck, Zeitdauer und Temperatur beim Verpressen eine Rolle spielen, sondern auch, wie zuvor angegeben, der Harzanteil der Unterschicht sowie die Viskosität des Harzes und die Saugfähigkeit der Druckpapierschicht und/oder der Unterschicht.

Eine definierte Teilbeharzung der Druckpapierschicht wird vorgenommen, um sehr gute Druckergebnisse zu erzielen.

Hinzuweisen ist im Zusammenhang mit der Teilbeharzung darauf, dass zwischen der Oberseite der Druckpapierschicht mit geringem oder ohne Harzanteil und dem unteren Bereich der Druckpapierschicht mit hohem Harzanteil in der Praxis keine exakte Trennlinie vorliegt, da sich bei der Verpressung der einzelnen Schichten mit dem Grundkörper ein Eindringen des Harzes von der Unterschicht in die Druckpapierschicht von unten nach oben ergibt, so dass die höchste Konzentration des Harzes an der Unterseite der Druckpapierschicht und damit am Übergang zur Unterschicht vorliegt. Der Übergang des oberen, im wesentlichen harzfreien Bereiches der Druckpapierschicht zum unteren Bereich der Druckpapierschicht zeichnet sich durch eine erkennbare Änderung des Harz-Konzentrationsgefälles aus.

Besonders eignet sich das erfindungsgemässe Verfahren bei der sogenannten Direktbeschichtung im Kurztaktpress verfahren. Hierbei schmilzt das Harz unter Druck und Hitze der Pressplatten auf, verbindet die Druckpapierschicht und die Unterschicht mit dem Grundkörper und härtet anschliessend unmittelbar aus. Wesentlich beim Kurztaktverfahren ist, dass der Grundkörper als Trägerplatte dem Pressdruck, der in der Regel zwischen 200 und 650 N/cm² liegt, nur unwesentlich nachgeben darf. Darüber hinaus dürfen der Grundkörper und die aufzubringenden Papierschichten beim Ein- und Austrag in die Presseinrichtung die heissen Pressplatten nicht berühren. Die Temperatur liegt beim Verpressen in der Regel zwischen 80 und 200 °C, bevorzugt zwischen 140 und 200 °C. Die jeweilige Temperatur ist unter anderem abhängig von der Reaktivierungstemperatur des Harzes. Ausserdem ist die sogenannte kritische Liegezeit, d. h. die Zeit vom ersten Kontakt der beharzten Schichten mit der Pressplatte bis zum Erreichen des notwendigen Pressdruckes, zu beachten. Diese kritische Liegezeit sollte extrem kurz sein.

Um ein Verlaufen der Tinte auf der Ober- bzw. Druckseite der Druckpapierschicht bei der weiteren Bearbeitung des Halbzeugs in jedem Falle zu vermeiden, bietet es sich an, die Oberseite der Druckpapierschicht vor dem Bedrucken zu glätten, fein zu schleifen und/oder insbesondere fein aufzurauhen. Das Glätten, Schleifen und/oder Aufrauhen kann beispielsweise durch spezielle Rakel oder Kalander erfolgen.

Zur Erzielung eines guten Druckergebnisses kann es sich alternativ zum Aufrauhen, Schleifen und/oder Glätten der Oberseite der Druckpapierschicht oder auch ergänzend dazu anbieten, auf der Oberseite der Druckpapierschicht eine Farbaufnahmeschicht vorzusehen, die zum Aufbringen und als Träger einer Farbschicht vorgesehen ist. Eine solche Farbaufnahmeschicht stellt sicher, dass es nicht zu einem unbeabsichtigten Verlaufen der Druckfarbe auf der Oberseite der Druckpapierschicht kommt.

Die vorliegende Erfindung bezieht sich im übrigen auch auf ein Halbzeug für ein flächiges Bauteil, insbesondere für Boden-, Wand-, Decken- und/oder Möbelanwendungen, das nach dem vorgenannten Verfahren hergestellt worden ist. Dieses Halbzeug zeichnet sich dadurch aus, dass es einen flächigen Grundkörper und eine unbedruckte Druckpapierschicht aufweist, wobei zwischen dem Grundkörper und der Druckpapierschicht eine beharzte Unterschicht vorgesehen ist und wobei die einzelnen Schichten mit dem Grundkörper verpresst sind. Ein solches Halbzeug kann nach seiner industriellen Fertigung in nachfolgenden Verfahrensschritten direkt zu einem flächigen Bauteil der vorgenannten Art weiterverarbeitet oder im unbedruckten Zustand zur späteren Verarbeitung weiterveräussert werden, beispielsweise an Bodenleger oder Druckereien, wo zu einem späteren Zeitpunkt die Bedruckung des Halbzeugs und die Fertigstellung des Bauteils erfolgt.

Die Druckpapierschicht ist über ihre Dicke nur teilbeharzt, wobei die Oberseite im wesentlichen harzfrei ist. Bevorzugt ist es in diesem Zusammenhang so, dass der obere Bereich der Druckpapierschicht, in dem sich nur ein geringer oder kein Harzanteil befindet, sich über maximal 50 % der Dicke der Druckpapierschicht erstreckt. Vorzugsweise sollte dieser Bereich zwischen 40 % und 5 % der Dicke der Druckpapierschicht liegen, wobei jeder einzelne Wert in dem vorgenannten Intervall möglich ist, auch wenn dieser im einzelnen nicht genannt ist.

Je nach Anwendungszweck sollte das Flächengewicht der Druckpapierschicht und der Unterschicht jeweils ohne Beharzungsanteil zwischen 30 und 300 g/m², vorzugsweise zwischen 50 und 120 g/m², liegen. Das Flächengewicht des Beharzungsanteils liegt zwischen 5 und 300 g/m², vorzugsweise zwischen 20 und 100 g/m².

Bei dem Harz der Unterschicht und gegebenenfalls der Druckpapierschicht handelt es sich insbesondere um ein reaktivierbares Harz, vorzugsweise um ein Aminoplast, wie ein Melamin-Harz. Bevorzugt werden Harze aus der Gruppe der Diallylphtalate, Epoxidharze, Harnstoff-Formaldehyd-Harze, Harnsäure-Acetylsäureester-Copolyester, Melamin-Formaldehyd-Harze, Melamin-Phenol-Formaldehyd-Harze, Phenol-Formaldehyd-Harze, Poly(meth)-acrylate oder ungesättigter Polyester-Harze verwendet.

Wenngleich es grundsätzlich möglich ist, dass die Oberseite der Druckpapierschicht des Halbzeugs unmittelbar zu bedrucken, hat es sich als bevorzugt erwiesen, druckseitig auf der Druckpapierschicht eine separate Farbaufnahmeschicht und insbesondere einen Pigmentstrich vorzusehen. Das Flächengewicht des Pigmentstrichs sollte dabei zwischen 0,5 und 20 g/m² betragen. Bevorzugt weist der Pigmentstrich Weisspigmente, wie Kaolin, Kalziumcarbonat, Aluminiumhydroxid, Talkum, Titandioxid, oder Farbpigmente, wie Eisenoxidpigmente, Russ, Kupfer, Aluminium, andere Metallpigmente, oder organische Farbpigmente auf. Der Pigmentstrich kann auch Flüssigfarbstoffe und/oder Kieselsäuren und/oder Kieselsole aufweisen. Des weiteren kann der Pigmentstrich natürliche oder synthetische Bindemittel, wie Stärke, Polyvinylalkohol, Carboxymethylzellulose, Polymerdispersionen auf der Basis von Acrylsäure, Acrylester, Styrol, Butadien, Vinylacetat oder Acrylnitril enthalten. Das Verhältnis von Pigment zu Bindemittel im Pigmentstrich liegt bevorzugt zwischen 1:0,05 bis 1:1 und insbesondere 1:0,08 bis 1:0,35, bezogen auf den Feststoffgehalt.

Die vorliegende Erfindung bezieht sich weiterhin auf ein Verfahren zum Herstellen eines flächigen bedruckten Bauteils der vorgenannten Art unter Verwendung eines zuvor beschriebenen Halbzeugs, wobei die Druckpapierschicht erst nach dem Aufpressen bedruckt wird. Dieses Bedrucken kann, wie zuvor beschrieben, unmittelbar im Anschluss an die Herstellung des Halbzeugs erfolgen, oder aber bedarfsweise auch erst zu einem späteren Zeitpunkt. Die Produktionslinie kann also hier durch eine Zwischenlagerung oder einen Vertrieb des Halbzeugs unterbrochen sein.

Die Bedruckung des Halbzeugs kann grundsätzlich mit allen bekannten Druckverfahren erfolgen. Bevorzugt erfolgt die Bedruckung der Druckpapierschicht mittels eines digitalen Druckverfahrens, insbesondere eines Tintenstrahl-druckverfahrens. Hierbei kommen dann vorzugsweise sogenannte Inkjet-Digitaldrucker, insbesondere Flachdrucker, zum Einsatz, mit denen sich hervorragende Druckergebnisse erzielen lassen.

Zur Bedruckung werden als Druckfarben bevorzugt lösemittelhaltige und/oder wasserhaltige Tinten verwendet. Grundsätzlich können auch UV-basierende Farbsysteme verwendet werden, wenngleich diese den Nachteil einer Geruchsentwicklung haben.

Jedenfalls sollte die Farbschicht bzw. die Druckfarbe unmittelbar entweder auf die Farbaufnahmeschicht oder, sofern diese nicht vorhanden ist, unmittelbar auf die Oberseite der Druckpapierschicht aufgebracht werden.

Um die Gefahr des Verlaufens der aufgebrachten Druckfarbe zu verringern, hat es sich im übrigen als günstig erwiesen, dass eine auf die Druckpapierschicht aufgebrachte Farbschicht während und/oder nach dem Bedrucken getrocknet wird und/oder dass die Druckpapierschicht vor dem Bedrucken über Umgebungstemperatur erwärmt wird. Hierzu können entsprechende der Presseinrichtung verfahrensmässig nachgeschaltete Heizeinrichtungen vorgesehen sein, die die Druckpapierschicht und insbesondere die Oberseite der Druckpapierschicht beheizen bzw. erwärmen. Dies kann beispielsweise über entsprechende Gebläse erfolgen. Statt dessen oder auch zusätzlich können Infrarot-, und insbesondere NIR-Heizeinrichtungen, und/oder Mikrowellenheizeinrichtungen vorgesehen sein, die unmittelbar auf den Wasseranteil in der FarbSchicht wirken. Die Beheizung bzw. Trocknung kann vor, während und/oder nach dem Bedrucken erfolgen. Hier können ein oder mehrere Heizgeräte vorgesehen sein, wobei die Trocknungsstrecke nicht nur punktuell vorgesehen sein, sondern sich auch über einen grösseren Bereich erstrecken kann, beispielsweise zwischen 0 bis 5 m, und insbesondere zwischen 2 und 3 m. Die Temperatur beim Heizen bzw. Trocknen ist abhängig von der Reaktivierungstemperatur des Harzes und liegt unterhalb dieser Temperatur. Üblicherweise liegt die Heiztemperatur zwischen 40 °C und 150 °C. Die vorgenannte Beheizung bzw. Erwärmung führt zu einer Trocknung der Tinte unmittelbar auf der Druckpapierschicht oder aber auf der Tintenaufnahmeschicht, sobald die Druckfarbe vom Druckkopf abgegeben und aufgebracht ist.

Zum Schutz der aufgebrachten Farbschicht bietet es sich an, auf diese nach dem Bedrucken eine Schutzschicht aufzubringen. Diese Schutzschicht kann entweder auflackiert oder aber insbesondere im Kurztaktpressverfahren aufgepresst werden, wie dies zuvor bereits beschrieben worden ist.

Schliesslich betrifft die vorliegende Erfindung ein bedrucktes flächiges Bauteil mit einem Halbzeug der zuvor beschriebenen Art, wobei auf die Druckpapierschicht eine Farbschicht und gegebenenfalls darauf eine ergänzende Schutzschicht aufgebracht ist.

Es wird ausdrücklich darauf hingewiesen, dass die vorgenannten und nachstehenden Bereichsangaben und Intervalle sämtliche innerhalb der Bereichsangaben und Intervalle liegende Einzelwerte und Zwischenintervalle bzw. Zwischenbereichsangaben umfassen, ohne dass es einer ausdrücklichen Erwähnung von Einzelwerten bzw. Zwischenintervallen oder Zwischenbereichsangaben bedarf.

Nachfolgend werden Ausführungsbeispiele der Erfindung anhand der Zeichnung näher beschrieben.

Es zeigt
- Fig. 1: eine schematische Querschnittsansicht einzelner Schichten eines erfindungsgemässen Halbzeugs im unverpressten Zustand,
- Fig. 2: eine der Fig. 1 entsprechende Ansicht einer anderen Ausführungsform eines erfindungsgemässen Halbzeugs,
- Fig. 3: eine der Fig. 1 entsprechende Ansicht einer weiteren Ausführungsform eines erfindungsgemässen Halbzeugs,
- Fig. 4: eine schematische Querschnittsansicht eines Teils eines verpressten erfindungsgemässen Halbzeugs und
- Fig. 5: eine schematische Querschnittsansicht eines Teils eines erfindungsgemässen flächigen Bauteils.

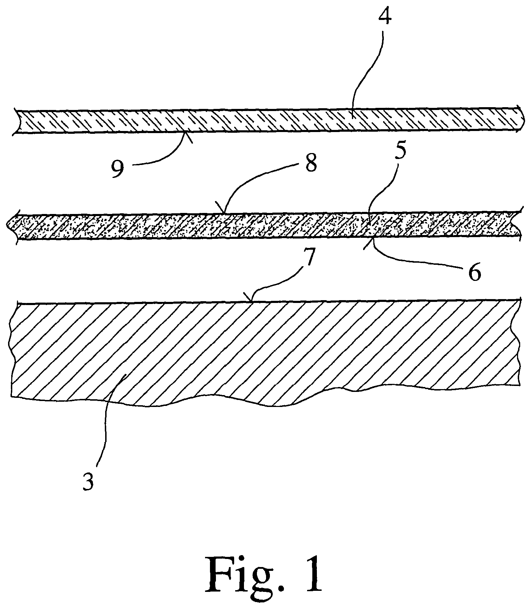

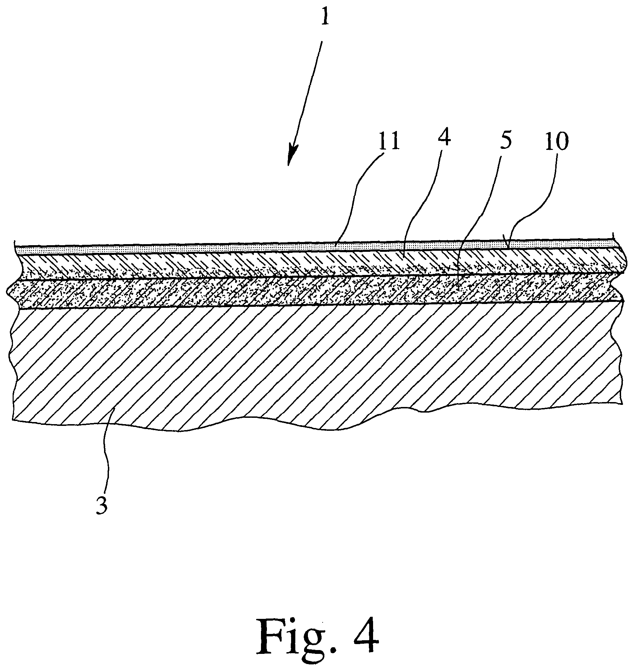

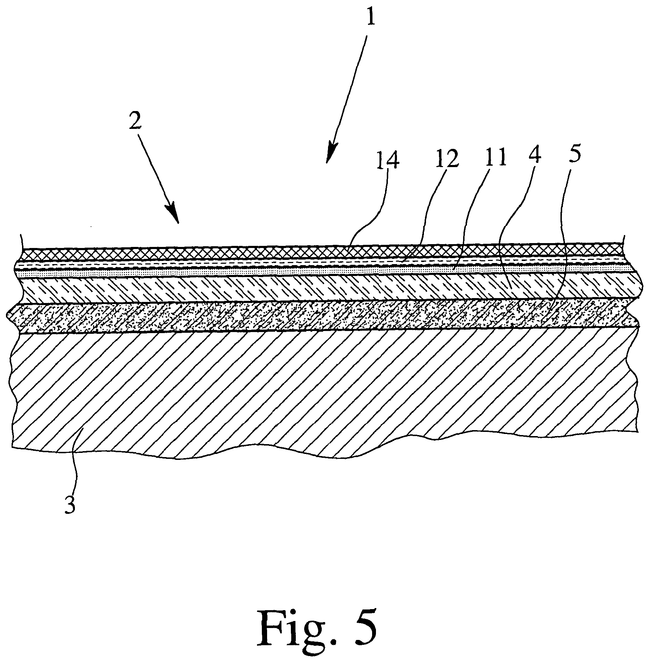

In den Fig. 1 bis 3 sind einzelne Schichten eines flächigen Halbzeugs 1 im unverpressten Zustand, das in Fig. 4 im verpressten Zustand dargestellt ist, gezeigt. Das Halbzeug 1 als solches ist zur Herstellung eines flächigen Bauteils 2 vorgesehen, wie dies in Fig. 5 dargestellt ist. Das Bauteil 2 ist grundsätzlich für Boden-, Wand-, Decken- und/oder Möbelanwendungen geeignet und vorgesehen. Dementsprechend kann es sich bei dem Bauteil 2 um eine Platte oder ein Panel oder auch um ein sonstiges Boden-, Wand- und/oder Deckenbelagselement oder aber um ein plattenförmiges Möbelelement handeln.

Das Halbzeug 1 weist einen flächigen Grundkörper 3 auf, der nur ausschnittsweise dargestellt ist. Der Grundkörper 3 ist ein- oder mehrlagig bzw. -schichtig aufgebaut und besteht insbesondere aus Holz- und/oder Kunststoffwerkstoffen. Insbesondere kann es sich bei dem Grundkörper 3 um eine Holzwerkstoffplatte, wie MDF-, HDF- oder DKS-Platte oder um eine sogenannte HPL(High Pressure Laminate)-Platte handeln. Grundsätzlich kann es sich bei dem Grundkörper 3 aber auch um dickere Folien, Pappe oder Gipskartonplatten handeln.

Weiterhin weist das Halbzeug 1 eine bedruckbare, vor dem Verbinden mit dem Grundkörper 3 jedoch unbedruckte Druckpapierschicht auf, die, wie sich aus Fig. 4 ergibt, mit dem flächigen Grundkörper 3 fest verbunden ist, nämlich unter Druck- und Hitzeeinfluss verpresst worden ist. Die Druckpapierschicht 4 besteht aus einem üblichen saug- bzw. flüssigkeitsaufnahmefähigen Papier- bzw. Fasermaterial.

Wesentlich ist nun, dass der Schichtaufbau des Halbzeugs 1 zusätzlich zu dem Grundkörper 3 und der Druckpapierschicht 4 eine separate, beharzte Unterschicht 5 aufweist, die zwischen der Druckpapierschicht 4 und dem Grundkörper 3 angeordnet ist. Die Unterschicht 5, bei der es sich letztlich um eine beharzte Papierschicht handelt, ist zusammen mit der Druckpapierschicht 4 mit dem Grundkörper 3 verpresst, wie sich dies aus Fig. 4 ergibt. Dabei liegt die Unterschicht 5 mit ihrer Unterseite 6 auf der Oberseite 7 des Grundkörpers 3 auf, während die Oberseite 8 der Unterschicht 5 an der Unterseite 9 der Druckpapierschicht 4 anliegt.

In den Fig. 1 bis 3 ist jeweils eine Unterschicht 5 dargestellt, die durchbeharzt ist. Dabei ist die Harzkonzentration über die Dicke der Unterschicht 5 zumindest im wesentlichen gleich. Grundsätzlich ist es aber auch möglich, dass die Unterschicht nur teilbeharzt ist. Die Teilbeharzung der Unterschicht 5 kann dadurch realisiert sein, dass die Unterschicht 5 lediglich von ihrer Unterseite 6 her oder aber von ihrer Oberseite 8 her beharzt ist. Auch eine beidseitige Beharzung ist möglich, wobei dann der mittlere Bereich der Unterschicht 5 unbeharzt sein kann. Auch ist es möglich, ober- und/oder unterseitig eine besonders hohe Harzkonzentration vorzusehen. Im dargestellten Ausführungsbeispiel mit durchbeharzter Unterschicht 5 beträgt das Flächengewicht der Unterschicht 5 einschliesslich des Beharzungsanteils etwa 170 g/m². Dabei liegt das Flächengewicht der Unterschicht 5 ohne Beharzungsanteil bei etwa 90 g/m².

Im in Fig. 1 dargestellten Ausführungsbeispiel ist die Druckpapierschicht 4 im unverpressten Zustand unbeharzt und unbedruckt. Das Flächengewicht der Druckpapierschicht 4 beträgt dabei etwa 90 g/m².

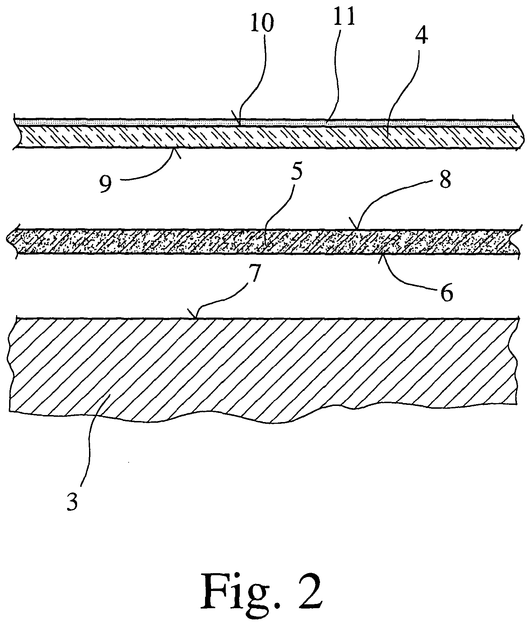

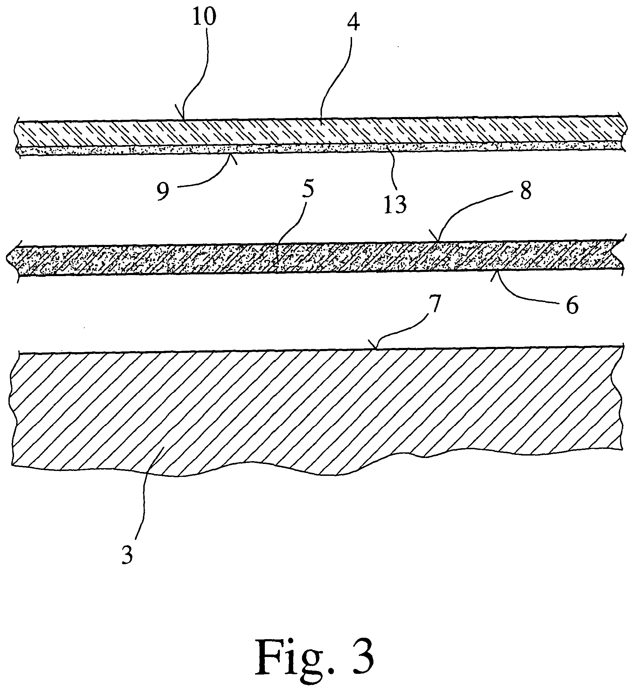

Bei der in Fig. 2 dargestellten Ausführungsform weist die Druckpapierschicht 4 auf ihrer Oberseite 10 eine separate Farbaufhahmeschicht 11 auf. Hierbei handelt es sich um einen Pigmentstrich, der vollflächig auf der gesamten Oberseite 10 der Druckpapierschicht 4 vorgesehen ist und die Oberseite 10 vollständig abdeckt. Die Farbaufnahmeschicht 11 dient zur Vergleichmässigung der Oberseite 10 der Druckpapierschicht 4, zur Aufnahme von Druckfarbe, zur Fixierung einer Farbschicht 12, wie diese bei dem Bauteil 2 gemäss Fig. 5 vorgesehen ist, und damit letztlich zur Verhinderung des Verlaufens der einzelnen Farben der Farbschicht 12. Die in Fig. 3 dargestellte Ausführungsform entspricht im wesentlichen der Ausführungsform gemäss Fig. 1, wobei jedoch der untere Bereich 13 der Druckpapierschicht 4 teilbeharzt ist. Es versteht sich, dass statt der dargestellten Teilbeharzung auch eine geringere oder stärkere Teilbeharzung bezogen auf die Dicke der Druckpapierschicht 4 möglich ist.

In Fig. 4 ist ein Halbzeug 1 im verpressten Zustand dargestellt. Das in Fig. 4 dargestellte Halbzeug 1 weist den in Fig. 2 dargestellten Schichtaufbau auf, wobei erkennbar ist, dass Harz aus der Unterschicht 5 in den unteren Bereich der Druckpapierschicht 4 eingedrungen ist. Hierdurch ergibt sich einerseits eine feste Verbindung der Druckpapierschicht 4 mit der Unterschicht 5 und im übrigen eine feste Verbindung der beiden Schichten 4, 5 mit dem Grundkörper 3. Im dargestellten Ausführungsbeispiel ist der Harzanteil der Unterschicht 5 so gewählt, dass sich nach dem Verpressen eine Teilbeharzung der Druckpapierschicht 4 ergibt, wobei die Oberseite 10 der Druckpapierschicht 4 zumindest im wesentlichen harzfrei bleibt. Im dargestellten Ausführungsbeispiel liegt das Flächengewicht der Farbaufnahmeschicht 11 zwischen 0,5 und 20 g/m². Letztlich ist das Flächengewicht zumindest im wesentlichen von der Art der verwendeten Druckfarbe abhängig.

Bei dem verwendeten Harz der Unterschicht 5 handelt es sich im übrigen um ein reaktivierbares Harz, insbesondere um Melamin, das beim Erhitzen unter Druck aufschmilzt und anschliessend unmittelbar aushärtet.

In Fig. 5 ist ein Bauteil 2 dargestellt, das ausgehend von einem Halbzeug 1 entsprechend Fig. 4 hergestellt worden ist. Hierbei ist auf das Halbzeug 1, d. h. auf die Farbaufhahmeschicht 11, eine Farbschicht 12 aufgebracht. Die Farbschicht 12 ist vorliegend mittels eines nicht dargestellten Inkjet-Digitaldruckers, nämlich eines Flachdruckers, mittels des Tintenstrahldruckverfahrens aufgebracht worden, wenngleich auch andere Druckverfahren grundsätzlich möglich sind. Bei der Druckfarbe kann es sich sowohl um lösemittelhaltige als auch wasserhaltige Tinte handeln.

Auf die Farbschicht 12 aufgebracht ist eine Schutzschicht 14, die vorliegend ebenfalls beharzt ist und zum Schutz der Farbschicht 12 vor UV-Strahlung und insbesondere vor mechanischer Beschädigung dient. Damit die Farbschicht 12 noch erkennbar ist, ist die Schutzschicht 14 transparent. Grundsätzlich können in die Schutzschicht 14 sehr harte Partikel, wie Korund, eingelagert sein. Wird das Bauteil 2 nicht im Bodenbereich eingesetzt, kann entweder auf die Schutzschicht 14 verzichtet werden oder aber diese weist eine geringere Schichtdicke und/oder einen geringeren Anteil von harten Partikeln auf. Bei der Schutzschicht 14 kann es sich auch um eine Lackierung handeln.

Die Herstellung eines Halbzeugs 1 und daraus eines Bauteils 2 erfolgt bevorzugt im Kurztaktpress verfahren. Hierbei handelt es sich um ein diskontinuierliches Pressverfahren, bei dem die zu verpressenden Teile einer Presseinrichtung zugeführt werden. Dabei werden über entsprechende Beschickungsstationen die einzelnen zu verpressenden Schichten zusammengeführt. Vorliegend wird auf einen beispielsweise rechteckigen Grundkörper 3 zunächst die Unterschicht 5 und anschliessend die Druckpapierschicht 4 aufgelegt. Nach entsprechender Ausrichtung der einzelnen Schichten zueinander wird die gesamte Einheit im nicht verpressten Zustand der Presse zugeführt. Dort wird der gesamte Verbund verpresst, wobei unter dem Druck und der Temperatur der Pressplatten das reaktive Harz aufschmilzt und anschliessend direkt aushärtet. Dabei ergibt sich ein fester Schichtenverbund. Nach der Verpressung wird das fertige Halbzeug 1 von der Presseinrichtung abgeführt. Es kann anschliessend direkt zum Bauteil 2 weiterverarbeitet oder aber im unbedruckten Zustand vertrieben werden. Gegebenenfalls ist ein Zuschneiden auf ein kleineres Mass notwendig.

Zum Herstellen des Bauteils 2 wird das Halbzeug 1 über einen Flachdrucker im digitalen Druckverfahren bedruckt. Hierzu wird die Farbschicht 12 auf die Farbaufnahmeschicht 11 aufgebracht. Vor dem Drucken kann die Farbaufnahmeschicht 11 erwärmt werden. Während und nach dem Drucken erfolgt im übrigen eine Trocknung der aufgebrachten Druckfarbe unterhalb der Reaktivierungstemperatur des verwendeten Harzes. Hieran schliesst sich die abschliessende Verpressung der beharzten Schutzschicht 14 erneut im Kurztaktpressverfahren an, um die Schutzschicht 10 nach Schmelzen und Aushärten des Harzes mit der Druckpapierschicht 4 zu verbinden.

Nach dem Aufbringen der Schutzschicht ist das Bauteil 2 als solches fertiggestellt und kann anschliessend bedarfsweise auf kleinere Masse zugeschnitten oder in eine Mehrzahl kleinerer Bauteile geschnitten werden.

### Bezugszeichenüste

- 1: Halbzeug
- 2: Bauteil
- 3: Grundkörper
- 4: Druckpapierschicht
- 5: Unterschicht
- 6: Unterseite
- 7: Oberseite
- 8: Oberseite
- 9: Unterseite
- 10: Oberseite
- 11: Farbaufnahmeschicht
- 12: Farbschicht
- 13: Unterer Bereich
- 14: Schutzschicht

## Patentansprüche

1. Verfahren zum Herstellen eines flächigen, bedruckbaren Halbzeugs (1) für ein flächiges Bauteil (2), insbesondere für Boden-, Wand-, Decken- und/oder Möbelanwendungen, wobei eine bedruckbare, unbedruckte Druckpapierschicht (4) mit einem flächigen Grundkörper (3) unter Druck- und Hitzeeinfluss verpresst wird, **dadurch gekennzeichnet**, wobei die Druckpapierschicht (4) unbeharzt ist, dass vor dem Verpressen eine Unterschicht (5) auf dem Grundkörper (3) angeordnet wird, die sich zwischen dem Grundkörper (3) und der Druckpapierschicht (4) befindet und dass die Unterschicht (5) zusammen mit der Druckpapierschicht (4) mit dem Grundkörper (3) verpresst wird und dass die Unterschicht (5) Harz enthält mit einen Flächengewicht zwischen 5 und 300 g/ m² und dass der Harzanteil der Unterschicht (5) derart gewählt ist, dass sich nach dem Verpressen unter Druck- und Hitzeeinfluss eine definierte Teilbeharzung der Druckpapierschicht (4) ergibt, wobei die Oberseite (10) der Druckpapierschicht (4) zumindest im wesentlichen harzfrei bleibt.

2. Verfahren nach Anspruch 1, **dadurch gekennzeichnet, dass** eine durchbeharzte oder teilbeharzte Unterschicht (5) verwendet wird.

3. Verfahren nach einem der vorhergehenden Ansprüche, **dadurch gekennzeichnet, dass** der Grundkörper (3) mit der Druckpapierschicht (4) und der Unterschicht (5) im Kurztaktpressverfahren direkt beschichtet wird.

4. Verfahren nach einem der vorhergehenden Ansprüche, **dadurch gekennzeichnet, dass** eine solche Druckpapierschicht (4) verwendet wird, auf deren Oberseite (10) eine separate, auf der Papierschicht (4) aufliegende Farbaufnahmeschicht (11) vorgesehen ist, die als Träger einer Farbschicht (12) dient.

5. Verfahren nach einem der vorhergehenden Ansprüche, **dadurch gekennzeichnet, dass** die Unterschicht (5) eine beharzte Papierschicht ist.

6. Verfahren zum Herstellen eines flächigen bedruckten Bauteils (2), insbesondere für Boden-, Wand-, Decken- und/oder Möbelanwendungen, unter Verwendung eines Halbzeugs (1), das im Verfahren nach Anspruch 1 gewonnen wurde, wobei die Druckpapierschicht (4) erst nach dem Verpressen bedruckt wird.

7. Verfahren nach einem der vorhergehenden Verfahrensansprüche, **dadurch gekennzeichnet, dass** die Druckpapierschicht (4) mittels eines digitalen Druckverfahrens, insbesondere eines Tintenstrahldruckverfahrens bedruckt wird.

## Claims

1. Method for manufacturing a printable, flat-shaped semi-finished product (1) for a flat-shaped building component (2), in particular for floor, wall, ceiling and/or furnishing applications; wherein a printable, unprinted printing paper layer (4) is pressed onto a flat-shaped base body (3) under the action of pressure and heat, **characterised in that** the printing paper layer (4) is resin-free, **in that**, prior to the pressing, a bottom layer (5) is arranged on the base body (3), which is located between the base body (3) and the printing paper layer (4); and **in that** the bottom layer (5) is pressed together with the printing paper layer (4) onto the base body (3); and **in that** the bottom layer (5) contains resin, with a basis weight of between 5 and 300 g/m²; and **in that** the resin content of the bottom layer (5) is selected such that, after the pressing under the effect of pressure and heat, a partial and defined application of resin to the printing paper layer (4) is achieved; wherein the upper side (10) of the printing paper layer (4) remains at least substantially free of resin.

2. Method according to claim 1, **characterised in that** a bottom layer (5) is used which is fully impregnated with resin or partially impregnated with resin.

3. Method according to any of the preceding claims, **characterised in that** the base body (3) is directly coated with the printing paper layer (4) and the bottom layer (5) in the short-cycle pressing process.

4. Method according to any of the preceding claims, **characterized in that** a printing paper layer (4) is used such that a separate ink-receiving layer (11) is provided on its upper side (10), which rests on the paper layer (4), which serves as a support for an ink layer (12).

5. Method according to any of the preceding claims, **characterised in that** the bottom layer (5) is a resin-impregnated paper layer.

6. Method for manufacturing a flat-shaped printed building component (2), in particular for floor, wall, ceiling and/or furnishing applications, wherein a semi-finished product (1) is used, which is obtained in accordance with the method according to claim 1; wherein the printing paper layer (4) is printed only after the pressing.

7. Method according to any of the preceding method claims, **characterised in that** the printing paper layer (4) is printed by means of a digital printing process, in particular an inkjet printing process.

## Revendications

1. Procédé destiné à la fabrication d'un produit semi-fini imprimable (1) de forme plate pour un élément de construction de forme plate (2), en particulier pour des applications de sols, de murs, de plafonds et/ou d'ameublement ; dans lequel on presse une couche de papier d'impression (4) imprimable, non imprimée contre un corps de base de forme plate (3) sous l'effet de la pression et de la chaleur, **caractérisé en ce que** la couche de papier d'impression (4) est exempte de résine ; **en ce que**, avant le pressage, on dispose une couche inférieure (5) sur le corps de base (3), qui se trouve entre le corps de base (3) et la couche de papier d'impression (4) ; et **en ce que** l'on presse la couche inférieure (5) de manière conjointe avec la couche de papier d'impression (4) avec le corps de base (3) ; et **en ce que** la couche inférieure (5) contient de la résine, avec un grammage entre 5 et 300 g/m² ; et **en ce que** la teneur de la couche inférieure (5) en résine est choisie d'une manière telle que, après le pressage sous l'effet de la pression et de la chaleur, on obtient une application partielle et définie de résine sur la couche de papier d'impression (4) ; dans lequel le côté supérieur (10) de la couche de papier d'impression (4) reste exempt de résine au moins de manière essentielle.

2. Procédé selon la revendication 1, **caractérisé en ce que** l'on utilise une couche inférieure (5) qui est entièrement imprégnée de résine ou partiellement imprégnée de résine.

3. Procédé selon l'une quelconque des revendications précédentes, **caractérisé en ce que** l'on enduit directement le corps de base (3) avec la couche de papier d'impression (4) et la couche inférieure (5) dans le procédé de pressage à cycle court.

4. Procédé selon l'une quelconque des revendications précédentes, **caractérisé en ce qu'**on utilise une couche de papier d'impression (4) telle que l'on prévoit, sur son côté supérieur (10), une couche réceptrice d'encre (11) séparée, qui repose sur la couche de papier (4), qui fait office de support à une couche d'encre (12).

5. Procédé selon l'une des revendications précédentes, **caractérisé en ce que** la couche inférieure (5) est une couche de papier imprégnée de résine.

6. Procédé destiné à la fabrication d'un élément de construction imprimé de forme plate (2), en particulier pour des applications de sols, de murs, de plafonds et/ou d'ameublement ; dans lequel on utilise un produit semi-fini (1), que l'on obtient conformément au procédé selon la revendication 1 ; dans lequel on n'imprime la couche de papier d'impression (4) qu'après le pressage.

7. Procédé selon l'une quelconque des revendications de procédé précédentes, **caractérisé en ce que** l'on imprime la couche de papier d'impression (4) au moyen d'un procédé d'impression numérique, en particulier d'un procédé d'impression du type à jet d'encre.
